# EUROPEAN PATENT APPLICATION

(11) **EP 1 724 994 A1**
(43) Date of publication of application: **22.11.2006**
(21) Application number: 06010422.1
(22) Date of filing: 19.05.2006
(51) Int. Cl.: H04M 1/04, B60R 11/02, H04B 1/38, F16B 47/00

(54) **Cradle for portable communication device**

(30) Priority: 20.05.2005 KR 20050042726
(71) Applicant: Samsung Electronics Co., Ltd., Suwon-si, Gyeonggi-Do (KR)
(72) Inventor: Jung, Gyoo-Hong c/oSamsung Electronics, Suwon-si Gyeonggi-do (KR); Kim, Sang-Hyun c/oSamsung Electronics, Suwon-si Gyeonggi-do (KR)
(74) Representative: Grünecker, Kinkeldey, Stockmair & Schwanhäusser Anwaltssozietät

(57) **Abstract**

Disclosed is a cradle for a portable communication device in which a sticking prevention member is provided between a support member and an absorption plate. The cradle includes a support member; an absorption plate engaged with a lower portion of the support member; a pressing lever provided at an upper portion of the support member and pressing against the absorption plate to move the support member as the pressing lever is rotated about a hinge axis; a rotation means providing the hinge axis and rotatably engaging the pressing lever with the absorption plate; and a sticking prevention member provided between the support member and the absorption plate, for preventing the support member and the absorption plate from sticking to each other when the support member and the absorption plate are pressed together.

## Description

### BACKGROUND OF THE INVENTION

### 1. Field of the Invention

The present invention relates to a cradle for a portable communication device in which a sticking prevention member is provided between a support member and an absorption plate.

### 2. Description of the Related Art

In general, "portable communication device" refers to an electronic device that a user can carry to perform wireless communication with a desired partner. The portable communication device refers to a hand-held phone (HHP), a CT-2 cellular phone, a digital phone, a personal communication system (PCS) phone, and a personal digital assistant (PDA). For example, radio terminals may be classified into various categories according to their appearance, such as a bar-type radio terminal, a flip-type radio terminal, and a folder-type radio terminal. A bar-type radio terminal is a device having a single bar-shaped housing. A flip-type portable communication device is a device in which a flip or a cover is rotatably mounted to a bar-shaped housing by a hinge unit. A folder-type communication device refers to a manner in which a folder is rotatably connected to a single bar-shaped housing by a hinge unit.

The portable communication device necessarily includes an antenna device, a data input/output device, and a data transmitting/receiving device. The data input device generally includes a key pad with which data are inputted by pressing with a finger, and can include a touch pad or a touch screen. The data output device generally includes a liquid crystal display (LCD) to display data.

Recently, it has become possible to watch moving pictures and TV, and play a game using a portable communication device. Further, the portable communication device can be mounted to a vehicle to use a function by which moving pictures, a game, and TV can be watched in addition to a talking function thereof.

In order to use the portable communication device for such a purpose, a cradle for a vehicle is needed to fix a separate terminal. The cradle for a vehicle is attached at a predetermined position of the interior of the vehicle to use conveniently in the state in which the terminal is engaged with the cradle, so that a driver does not have to hold the portable terminal while driving the vehicle.

However, since the cradle for the portable communication device is fixed to a dashboard or a predetermined position of the vehicle by using screws and/or an adhesive, after the cradle has been installed to the vehicle, it cannot be moved and installed again at a different place without leaving traces of the adhesive and the screws at the former position. In order to avoid this problem, an absorption member which can be attached and detached easily is used. In this case, the pressure in the absorption member is lowered and a restoring force is generated, thereby performing the absorption, by pulling a central portion of the absorption member and extending the absorption member entirely or partially. However, the structure using the absorbing force has problems in that the absorption member may become stuck to the vehicle due to vibrations, temperature, and changes in humidity, lowering the absorbing operation of the cradle, and a concentrated force may be applied to the absorption portion locally over time, introducing air through an aperture formed by the concentrated force and lowering the absorbing force.

### SUMMARY OF THE INVENTION

Accordingly, the present invention has been made to solve the above-mentioned problems occurring in the prior art, and an object of the present invention is to provide a cradle for a portable communication device which provides a uniform pressing force, thereby improving the pressing force of the cradle.

Another object of the present invention is to provide a cradle for a portable communication device which includes a sticking prevention member between a support member and an absorption plate to prevent the support member and the absorption plate from sticking to each other due to an extemal environment after the cradle is mounted for a long time.

In order to accomplish these objects, there is provided a cradle for a portable communication device, which includes a support member; an absorption plate engaged with a lower portion of the support member; a pressing lever provided at an upper portion of the support member and pressing the absorption plate by pressing and moving the support member as the pressing lever is rotated about a hinge axis; a rotation means provided on the hinge axis and rotatably engaging the pressing lever with the absorption plate; and a sticking prevention member provided between the support member and the absorption plate, for preventing the support member and the absorption plate from sticking to each other when the support member and the absorption plate are pressed together.

### BRIEF DESCRIPTION OF THE DRAWINGS

The above and other objects, features, and advantages of the present invention will be more apparent from the following detailed description taken in conjunction with the accompanying drawings, in which:
FIG. 1 is an exploded perspective view showing a cradle for a portable communication device according to a preferred embodiment of the present invention;
FIG. 2 is a perspective view showing the state in which a sticking prevention member is attached to an upper portion of an absorption plate in a cradle of a portable communication device according to a preferred embodiment of the present invention;
FIG. 3 is a side view showing a cradle of a portable communication device according to a preferred embodiment of the present invention in use;
FIG. 4 is a perspective view showing a cradle of a portable communication device according to a preferred embodiment of the present invention in use; and
FIG. 5 is a perspective view showing a cradle of a portable communication device according to a preferred embodiment of the present invention in use with a portable communication device shown in phantom.

### DETAILED DESCRIPTION OF THE PREFERRED EMBODIMENT

Hereinafter, a preferred embodiment of the present invention will be described with reference to the accompanying drawings.

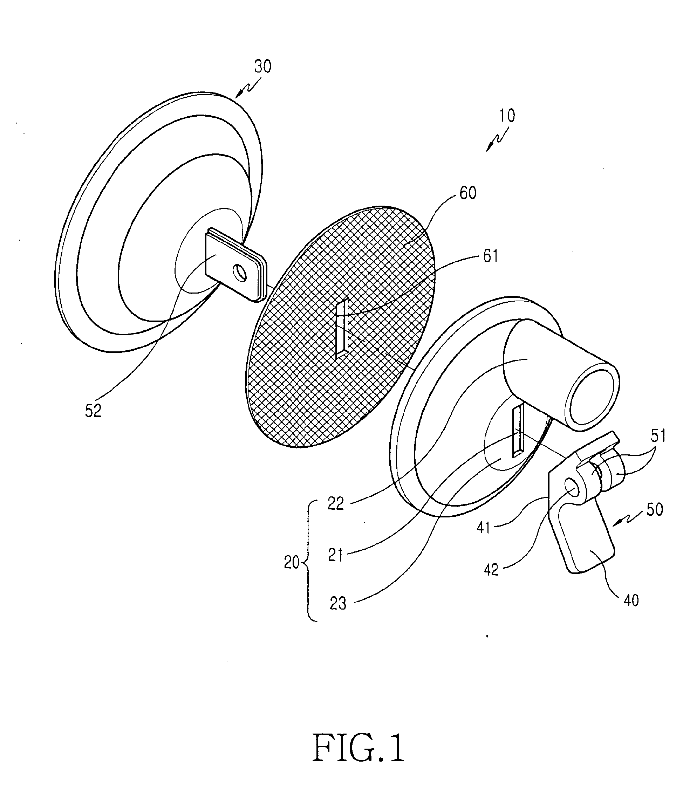

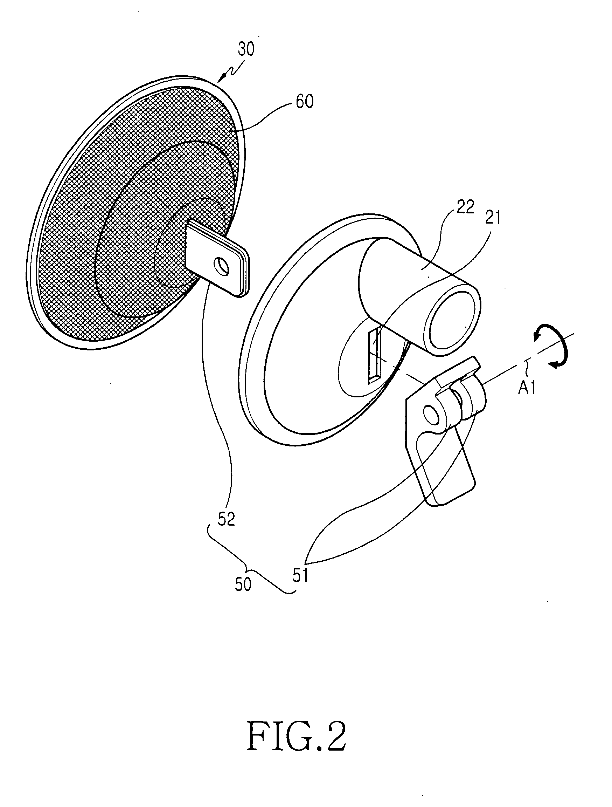

As shown in FIGs. 1 and 2, a cradle 10 of a portable communication device includes a support member 20, an absorption plate 30, a pressing lever 40, a rotation means 50, and a sticking prevention member 60. The absorption plate 30 is engaged with the lower portion of the support member 20 so as to be attached at a predetermined position of a vehicle. The pressing lever 40 is rotatably engaged with one end of a center hinge member 52 formed in the rotation means 50. The pressing lever 40 is provided at the upper portion of the support member 20 so that the support member 20 is pressed and moved in the axial direction of the center of the support member 20 and the absorption plate 30 is pressed as the pressing lever 40 is rotated about a hinge axis A1 of the rotation means 50. The rotation means 50 engages the pressing lever 40 rotatably with the absorption plate 30. The sticking prevention member 60 is provided between the support member 20 and the absorption plate 30.

As shown in FIG. 2, the rotation means 50 includes a pair of side hinge members 51 and the center hinge member 52. The side hinge members 51 are formed in the pressing lever 40 so as to be rotatably engaged with the center hinge member 52 about the hinge axis A1. The center hinge member 52 protrudes from the central portion of the absorption plate 30 so that the side hinge members 51 are rotatably engaged therewith about the hinge axis A1.

A protrusion hole 21 is formed at the central portion of the support member 20 so that the center hinge member 52 penetrates and protrudes therethough. Further, a penetration hole 61 is formed at the central portion of the sticking prevention member 60 so that the center hinge member 52 penetrates and protrudes therethough.

As shown in FlGs, 2, 4 and 5, an engagement tube 22 is formed in the support member 20 so as to be engaged with the connection member 3 connected to a cradle member 2 of the portable terminal 1.

Further, as shown in FIG. 1, a pressing portion 41 is formed in the pressing lever 40 so that it presses against a pressing surface 23 formed in the support member 20 when the pressing lever 40 is rotated.

As shown in FIGs. 1-3, the sticking prevention member 60 is formed of a nonwoven fabric to prevent the support member 20 and the absorption plate 30 from sticking to each other. Prominences and depressions are formed on both surfaces of the sticking prevention member 60 to prevent the support member 20 and the absorption plate 30 from sticking to each other even after the support member 20 and the absorption plate 30 are pressed together for a long time.

Hereinafter, the operation of the cradle for a portable communication device according to the preferred embodiment of the present invention will be described in detail with reference to FlGs. 1 to 5.

As shown in FlGs. 1 and 2, the cradle 10 for a portable communication device includes the support member 20, the absorption plate 30, a pressing lever 40, the rotation means 50, and the sticking prevention member 60.

The sticking prevention member 60 is engaged with the upper portion of the absorption plate 30. Then, the center hinge member 52 formed at the central portion of the absorption 30 penetrates and protrudes through the penetration hole 61 formed at the central portion of the sticking prevention member 60. In this state, the support member 20 is engaged with the upper surface of the sticking prevention member 60.

The center hinge member 52 extends and protrudes through the protrusion hole formed at the central portion of the support member 20. The pair of side hinge members 51 formed in the pressing lever 40 are rotatably engaged with the center hinge member 52 by means of pin 42.

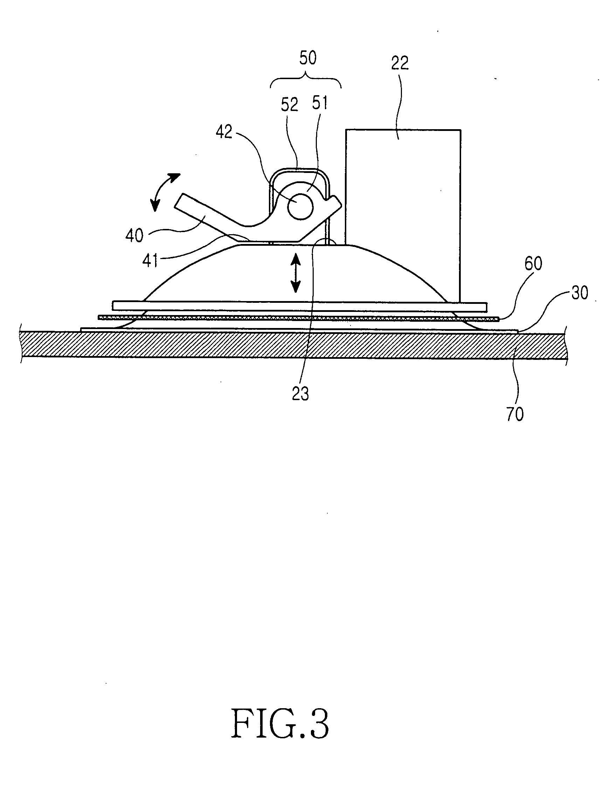

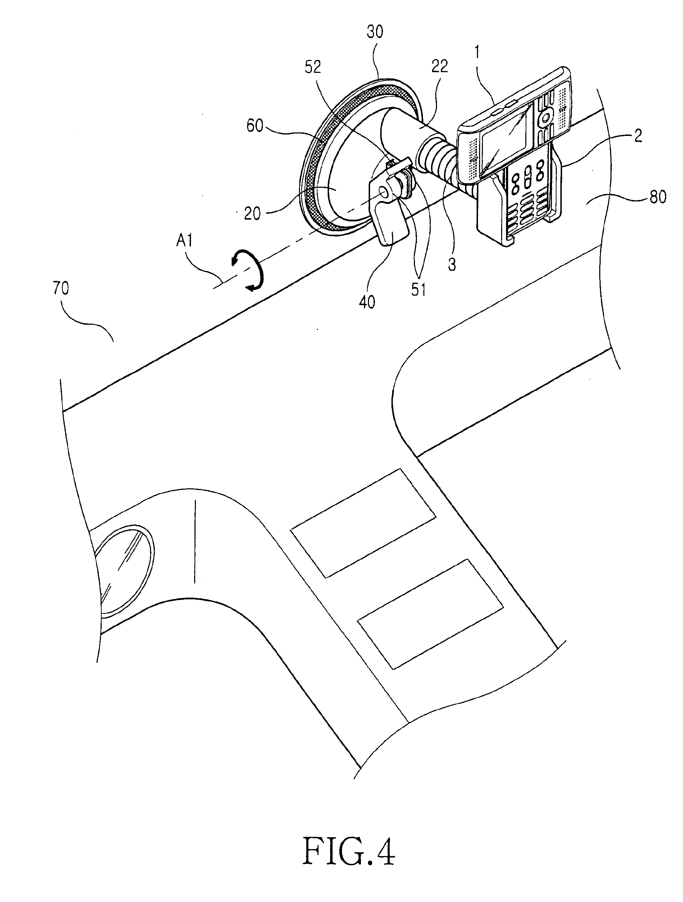

In this state, as shown in FIG. 3 and 4, in order to install the cradle 10 in a vehicle, the absorption plate 30 contacts a predetermined position of a glass 70 or a dash board 80 and the pressing lever 40 is rotated about the hinge axis A1 of the rotation means 50. Then, as shown in FIG. 3, the pressing portion 41 formed in the pressing lever 40 is rotated and presses against the pressing surface 23 formed on the upper surface of the support member 20.

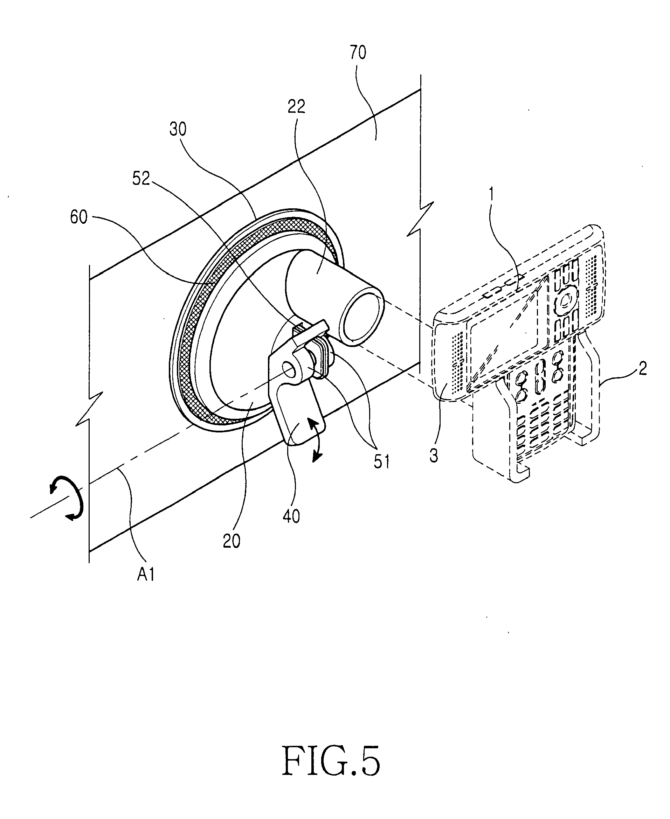

As shown in FIGs. 4 and 5, in order to attach the cradle 10 to the glass 70 or the dash board 80 of the vehicle, the support member 20 is pressed by the pressing lever 40 and the absorption plate 30 is pressed. In this state, after a connection member 3 formed on the lower surface of a cradle member 2 is engaged with the engagement tube 22 formed in the support member 20, the terminal is mounted to the cradle member 2 to watch moving pictures, a game, or TV.

The sticking prevention member 60 is formed of a nonwoven fabric to prevent the absorption plate 30 and the support member 20 from sticking to each other. Prominences and depressions are formed on both surface of the sticking prevention member 60.

It is easy to attach and detach the cradle 10, and simple to assemble and disassemble the cradle 10.

According to the present invention, the sticking prevention member prevents the absorption plate and the support member from sticking to each other even after the cradle is mounted to a vehicle for a long time, thereby maintaining a constant pressing force of the absorption plate and improving the attaching force of the cradle.

While the cradle for a portable communication device according to the present invention has been shown and described with reference to a certain preferred embodiment thereof, it will be understood by those skilled in the art that various changes in form and details may be made therein without departing from the scope of the invention as defined by the appended claims.

## Claims

1. A cradle (10) for a portable communication device (1), which comprises:
a support member (20);
an absorption plate (30) engaged with a lower portion of the support member (20);
a pressing lever (40) provided at an upper portion of the support member (20) and pressing against the absorption plate (30) by pressing and moving the support member as the pressing lever rotates about a hinge axis (A1);
a rotation means (50) providing the hinge axis (A1) and rotatably connecting the pressing lever (40) with the absorption plate (30); and
a sticking prevention member (60) provided between the support member (20) and the absorption plate (30), for preventing the support member and the absorption plate from sticking to each other when the support member and the absorption plate are pressed together.

2. A cradle according to claim 1, wherein the rotation means (50) comprises a pair of side hinge members (51) formed in the pressing lever (40) and a center hinge member (52) rotatably engaged with the side hinge arms protrudes from the central portion of the absorption plate (30).

3. A cradle according to claim 1, wherein the support member (20) has a protrusion hole (21) formed at a central portion of the support member and the sticking prevention member (60) has a penetration hole (61) formed at a central portion of the sticking prevention member, the center hinge member (52) extending and protruding through the protrusion hole and the penetration hole.

4. A cradle according to claim 1, wherein the support member (20) further includes an engagement tube (22) adapted to be engaged with a connection member (3) connected to a cradle member (2) of the portable communication device (1).

5. A cradle according to claim 1, wherein the pressing lever (40) includes a pressing portion (41) for pressing against a pressing surface (23) formed in the support member (20).

6. A cradle according to claim 1, wherein the sticking prevention member (60) is formed of a nonwoven fabric.

7. A cradle according to claim 1, wherein prominences and depressions are formed on both side surfaces of the sticking prevention member (60).

8. A cradle (10) for a portable communication device (1) which comprises:
a support member (20);
an absorption plate (30) engaged with the support member (20);
a pressing means (40,50) for pressing against the absorption plate (30); and
a sticking prevention member (60) provided between the support member (20) and the absorption plate (30).
